# EUROPEAN PATENT SPECIFICATION

(11) **EP 4 390 305 B1**
(45) Date of publication and mention of the grant of the patent: **26.03.2025**
(21) Application number: 22215431.2
(22) Date of filing: 21.12.2022
(51) Int. Cl.: G01B 21/04, G01B 5/008

(54) **COORDINATE MEASURING MACHINE**
KOORDINATENMESSMASCHINE
MACHINE DE MESURE DE COORDONNÉES

(43) Date of publication of application: 26.06.2024
(73) Proprietor: Hexagon Technology Center GmbH, 9435 Heerbrugg (CH)
(72) Inventor: KHANENYA, Nikolay, 9000 St.Gallen (CH); BRÜHLMANN, Danick, 9422 Staad (CH); ISELI, Claudio, 9434 Au (CH)
(74) Representative: Kaminski Harmann

(56) References cited:
- DE-A1- 102019 220 247
- US-A1- 2019 066 337

## Description

The present invention generally pertains to a coordinate measuring machine (CMM) and to a method for measuring coordinates with a CMM. More particularly, the invention pertains to a CMM having a functionality for compensating distortions within the machine's structural elements.

Coordinate measuring devices, such as stationary coordinate measuring machines (CMM) or portable articulated arm coordinate measuring machines (AACMM) or laser-based coordinate measuring devices including laser trackers, laser scanners and total stations are used in a wide variety of applications in quality management and quality assurance. Conventionally, highly precise CMM need to be very stable in order to withstand inertial distortions that may arise due to its own operating weight and - especially since fast measurements are also desirable - its movements. Conventional CMM are thus very heavy devices that are complicated to move and cannot be installed everywhere, e.g. due to weight-loading restrictions.

It would thus be desirable to provide a light-weight CMM that still allows highly-precise measurements.

It is therefore an object of the present invention to provide an improved CMM which is less heavy than conventional CMM.

It is a further object of the present invention to provide such a CMM that allows determining spatial coordinates with high precision.

It is a further object of the present invention to provide such a CMM that may have light-weight and flexible structural components.

It is a further object of the present invention to provide such a CMM having a distortion-compensation functionality.

It is a further object of the present invention to provide such a CMM, wherein the CMM can be portable, handheld and/or battery-operated.

At least one of these objects is achieved by the CMM of claim 1, the method of claim 11 and/or the dependent claims of the present invention.

A first aspect of the invention pertains to a CMM for determining at least one spatial coordinate of a measurement point on an object, the CMM comprising a structure movably connecting a probe head to a base, the structure comprising a plurality of rotary joints and a plurality of elongate components, the components comprising a plurality of links. At least one of the rotary joints movably connects two of the components with each other, comprises a driving unit comprising a motor to actuate the connected components relative to another, and comprises a measuring unit comprising one or more sensors to determine at least one angle between the connected components and to generate angular data. The CMM comprises a control unit configured to control the motor of each driving unit for driving the probe head relative to the base for approaching the measurement point, to receive the angular data, and to determine the at least one spatial coordinate of the measurement point based on the angular data. The control unit has access to distortion information about distortions occurring in the components and/or joints under a multitude of different distortion-influencing conditions of the structure.

According to some embodiments of the CMM, these conditions comprise at least a current pose of the structure that is defined by the angles between the components, the distortion information comprising pose distortion information for a multitude of different poses of the structure. In these embodiments, the control unit is configured
- to receive pose distortion information for the current pose,
- to determine a current pose distortion based on the pose distortion information for the current pose, the pose distortion being a distortion of the structure due to its pose,
- to determine a current overall distortion of the structure based at least on the current pose distortion, and
- to determine the at least one spatial coordinate also based on the current overall distortion of the structure.

According to some embodiments of the CMM, the conditions comprise at least one or more current accelerations of the structure that are a consequence of a motorized movement of the components, wherein the distortion information comprises acceleration distortion information for a multitude of different movements of the structure. In these embodiments, the control unit is configured
- to determine a current acceleration of the structure, particularly based on the angular data,
- to determine a current acceleration distortion based on the acceleration distortion information and on the current acceleration, and
- to determine the current overall distortion of the structure based also on the current acceleration distortion.

According to some embodiments of the CMM, the conditions comprise at least a current temperature distribution in the structure, wherein the distortion information comprises thermal distortion information for a multitude of different temperature distributions in the structure. In these embodiments, the control unit is configured
- to receive temperature data,
- to determine a current temperature distribution of the structure based on the temperature data,
- to determine a current thermal distortion based on the thermal distortion information and on the current temperature distribution, and
- to determine the current overall distortion of the structure based also on the current thermal distortion.

For instance, one or more temperature sensors may be provided at each link or at each component, the temperature data being generated by these temperature sensors.

According to some embodiments of the CMM, the amount of pose distortion is at least partly a consequence of gravity, wherein the distortion information comprises the pose distortion information for a multitude of different poses of the structure under the influence of a multitude of different gravitational values. In these embodiments, the control unit is configured
- to determine a gravitational value for a current (e.g. geographic) location of the coordinate measuring machine, and
- to determine the current pose distortion based also on the gravitational value.

For instance, the control unit may be configured to receive position data related to a location of the CMM and to determine the current location of the CMM based on the position data. The location in particular may be a geographic location, e.g. comprising longitude and latitude values as well as a height.

In some embodiments of the CMM, the distortion information relates to distortions occurring in each of the links.

In some embodiments of the CMM, the elongate components further comprise the base and/or the probe head.

According to some embodiments of the CMM,
- at least a subset of the components, particularly at least a subset of the links, comprises supporting elements that are made from a first material or material composition,
- at least a subset of the rotary joints comprises supporting elements that are made from a second material or material composition, and
- the first material or material composition is more flexible than the second material or material composition.

Optionally, the first material or material composition has a lower overall density than the second material or material composition.

The first material composition for instance may comprise aluminium or other light metals, light metal alloys, ceramics, plastics and/or carbon-fibre-reinforced polymers. The second material or material composition for instance may comprise high-alloy steel or a comparable material, e.g. coated low-alloy steel. The second material should provide a uniform coefficient of thermal expansion (CTE) along the whole metrology chain (which includes bearings and sensor interfaces) and a high Young modulus for high stiffness with low form factor.

In some embodiments of the CMM, the measuring unit and the driving unit of each rotary joint are thermally decoupled from each other and/or are provided in separate housings.

In some embodiments of the CMM, at least one rotary joint comprises a measuring unit that includes at least two rotary encoders as angular sensors, each rotary encoder being configured to determine a relative pose between a first link and a second link with at least three degrees of freedom.

In some embodiments of the CMM, at least one measuring unit is configured to determine relative poses between two links in at least five degrees of freedom.

In some embodiments of the CMM, the distortion information is provided as part of a digital model of the CMM.

A second aspect of the invention pertains to a computer-implemented method for controlling a CMM - e.g. the coordinate measuring machine according to the first aspect of the invention - to determine at least one spatial coordinate of a measurement point on an object to be measured, wherein the CMM comprises a structure movably connecting a probe head to a base, the structure comprising a plurality of rotary joints and a plurality of elongate components, the components comprising a plurality of links, each rotary joint movably connecting two of the components with each other, comprising a driving unit with a motor to actuate the connected components relative to another, and a measuring unit with one or more angular sensors to measure at least one angle between the connected components and to generate angular data.

The method, which may be performed by a control unit of the CMM, comprises controlling the motors for driving the probe head relative to the base for approaching the measurement point, and receiving the angular data.

The method further comprises
- receiving distortion information about distortions occurring in the components under a multitude of different distortion-influencing conditions,
- determining a current overall distortion of the structure, and
- determining the at least one spatial coordinate of the measurement point based on the angular data and on the determined current overall distortion.

According to some embodiments of the method, the conditions comprise at least a current pose of the structure that is defined by the angles between the links, the distortion information comprising pose distortion information for a multitude of different poses of the structure. In these embodiments, the method comprises determining a current pose distortion based on the pose distortion information and on the angular data. Determining the current overall distortion of the structure is then based at least on the current pose distortion.

According to some embodiments of the method, the conditions comprise at least current accelerations of the structure that are a consequence of a motorized movement of the components, wherein the distortion information comprises acceleration distortion information for a multitude of different movements of the structure. In these embodiments, the method comprises determining a current movement or acceleration of the structure, particularly based on the angular data, and determining a current acceleration distortion based on the acceleration distortion information and on the current movement. Determining the current overall distortion of the structure is then based at least on the current acceleration distortion.

According to some embodiments of the method, the conditions comprise at least a current temperature distribution in the structure, wherein the distortion information comprises thermal distortion information for a multitude of different temperature distributions in the structure. In these embodiments, the method comprises receiving temperature data, determining a current temperature distribution of the structure based on the temperature data, and determining a current thermal distortion based on the thermal distortion information and on the current temperature distribution. Determining the current overall distortion of the structure is then based at least on the current thermal distribution.

According to some embodiments of the method, the amount of pose distortion is at least partly a consequence of gravity, wherein the distortion information comprises the pose distortion information for a multitude of different poses of the structure under the influence of a multitude of different gravitational values. In these embodiments, the method comprises receiving position data related to a location of the coordinate measuring machine, determining a current location of the coordinate measuring machine based on the position data, and determining a gravitational value for the current location. Determining the current pose distortion is then also based on the gravitational value for the current location.

A third aspect of the invention pertains to a computer program product comprising program code which is stored on a machine-readable medium, or being embodied by an electromagnetic wave comprising a program code segment, and having computer-executable instructions for performing the method according to the second aspect of the invention, particularly when executed in a control unit of a CMM according to the first aspect of the invention.

The invention in the following will be described in detail by referring to exemplary embodiments that are accompanied by figures, in which:
- Fig. 1: shows an exemplary embodiment of a CMM according to the invention;
- Fig. 2: shows the CMM assuming two different poses;
- Figs. 3a-b: show two exemplary embodiments of a joint as part of a CMM according to the invention;
- Fig. 4: shows an exemplary embodiment of a system for compensating distortions;
- Fig. 5: illustrates using and calibrating a digital model of the CMM;
- Fig. 6: shows a flowchart illustrating a first exemplary embodiment of a method according to the invention; and
- Fig. 7: shows a flowchart illustrating a second exemplary embodiment of a method according to the invention.

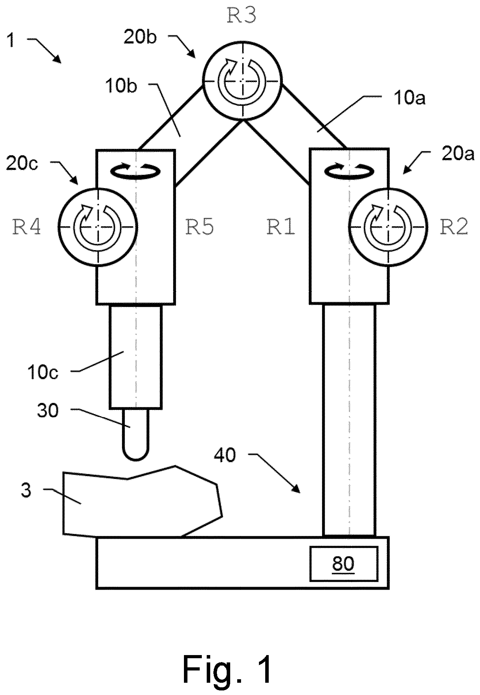

Figure 1 shows an exemplary embodiment of a CMM 1 according to the invention. The CMM 1 is configured for determining spatial coordinates of measurement points on an object 3. It comprises a structure movably connecting a probe head 30 to a base 40.

In the shown example, the structure of the CMM 1 comprises three rotary joints 20a, 20b, 20c and three links 10a, 10b, 10c. The rotary joints 20a-c movably connect the links 10a-c with each other and with the base 40. A first rotary joint 20a provides movability of a first link 10a relative to the base 40 about the two axes of rotation R1 and R2. A second rotary joint 20b provides movability of a second link 10b relative to the first link 10a about the axis of rotation R3. A third rotary joint 20c provides movability of a third link 10c relative to the second link 10b about the two axes of rotation R4 and R5.

Each of the joints 20a-c comprises an actuator for moving the connected components relative to another, and a measuring unit with sensors for determining one or more angles between the connected components. A control unit 80 of the CMM 1 is configured to receive angular data related to the measured angles from the measuring units, to control the actuators for driving the probe head 30 relative to the base 40 for approaching the measurement point on the object 3, and to determine spatial coordinates of the measurement point based on the angular data.

The CMM 1 is built light-weight. To save weight, the structure may be built so flexible that that its different distortions due to different poses of the structure alone lead to significant deviations of the probe head 30 from its assumed position so that the measured coordinates may deviate from the real coordinates in such a way that, conventionally, the CMM 1 could not be used for highly-precise measurements. Especially the links 10a-c may have a material composition and/or be constructed in a manner that are not considered stable enough, i.e. too flexible, for conventional measurement with a CMM. For instance, the links 10a-c may be made from light metals, particularly aluminium, light metal alloys, ceramics, plastics and/or carbon-fibre-reinforced polymers.

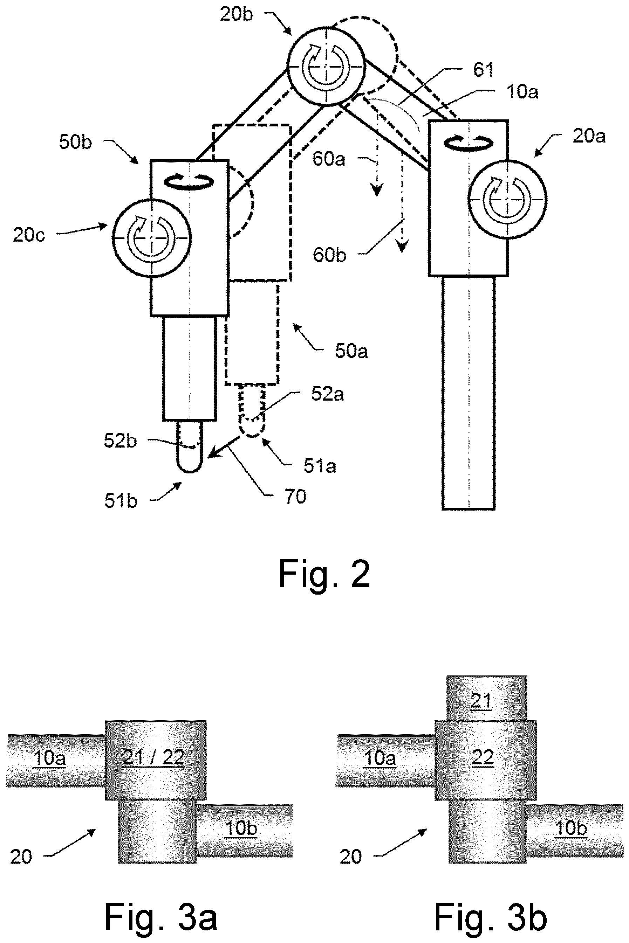

Figure 2 illustrates different distortions of the structure of the CMM of Figure 1 due to different poses of its arm-like structure. In a first pose 50a of the structure (elements shown with dashed lines) the probe head is at a first position 51a. For a movement 70 of the probe head to a second position 51b, the structure assumes a second pose 50b, by changing the angles at each of the rotary joints 20a-c. This new pose 50b leads to a different load borne by each of the links. Here, this is illustrated for the first link 10a only. The new pose 50b leads to a load 60b to be borne by the first link 10a that his higher than the load 60a in the first pose 50a. This effects a distortion 61 in the first link 10a that differs from the previous distortion during the first pose 50a. Due to these distortions, the real positions 51a, 51b of the probe head differs from the assumed positions 52a, 52b. Also, the difference between the real position 51a and the assumed position 52a in the first pose 50a is smaller than the difference between the real position 51b and the assumed position 52b in the second pose 50b. To overcome this lack of precision due to inertial distortions 61, according to the invention the CMM 1 comprises a functionality to compensate these distortions.

Figures 3a and 3b show two exemplary embodiments of a joint 20 of a CMM according to the invention. As shown here, a joint 20 movably connects two of the links 10a, 10b. Additionally (not shown here), one of the joints may movably connect one of the links 10a, 10b with a base of the CMM, and another one of the joints may movably connect another one of the links 10a, 10b with a probe head of the CMM. In both embodiments of Figures 3a and 3b, the joint 20 comprises a driving unit 21 having a motor to actuate the two links 10a, 10b that are connected by the joint 20 relative to one another. Also, in both embodiments, the joint 20 comprises a measuring unit 22 having one or more angular sensors to determine at least one angle between the two links 10a, 10b.

In the example of Figure 3a, the measuring unit 21 and the driving unit 22 are provided together, for instance together in a single housing. This allows for a compact setup.

In the example of Figure 3b, the measuring unit 21 and the driving unit 22 are provided thermally decoupled from each other, for instance in separate housings. This reduces the heat transfer between the two components, particularly from the motor of the driving unit 22 to the sensors of the measuring unit 21 and the structural elements of the joints. At least one heating element may be is provided at the joint 20 to active control the temperature at the joint, particularly at the measuring unit 22.

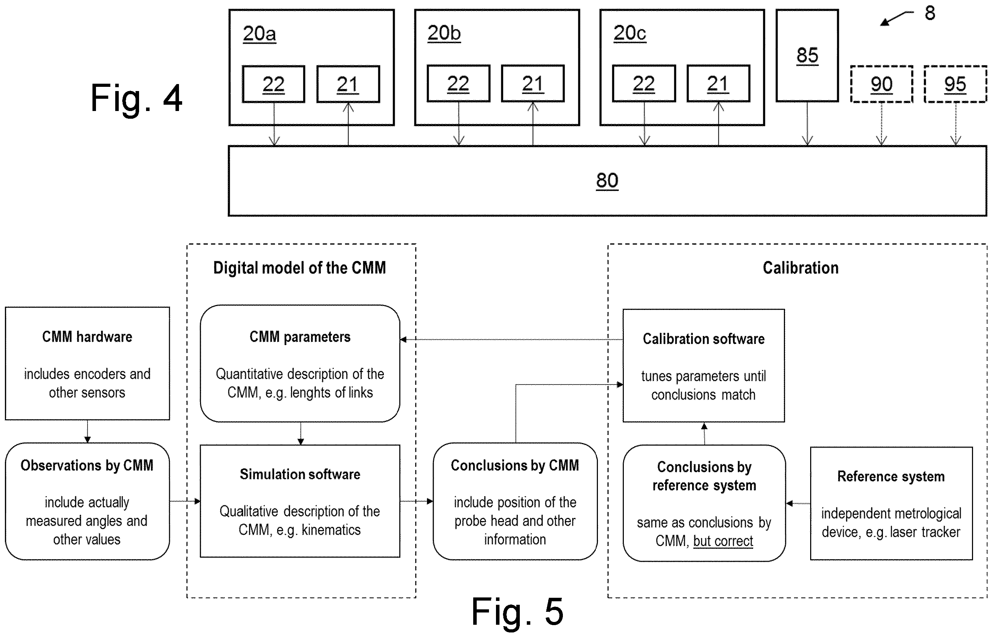

Figure 4 schematically shows a system 8 for distortion compensation. In the shown example, the system 8 comprises the control unit 80 of the CMM of Figure 1. The control unit 80 is configured to receive angular data related to the measured angles from the measuring units 22 of each rotary joint 20a-c and to control the actuators 21 of each rotary joint 20a-c for driving the probe head relative to the base for approaching a measurement point on an object to be measured. Based on the received angular data, spatial coordinates of the probe head (and, thus, the measurement point) can be derived. However, due to distortions occurring in the structure - for instance dependent on a current pose of the structure -, the derived spatial coordinates may differ from the real coordinates in a relevant manner, i.e. to an extent that it negatively influences the measuring precision and provides incorrect values.

Thus, according to the invention, the control unit 80 may have access to distortion information, i.e. information about distortions (or information that enables evaluation of distortions) occurring in the structure under a multitude of different distortion-influencing conditions. This information may be pre-determined and provided in a data base 85. Using this information, the control unit 80 can reconstruct these distortions and then compute the correct coordinates of the probe head and the measurement point. Optionally, further sensors may be connected and provide their data to the control unit 80, e.g. temperature sensors 90 and/or a GNSS sensor 95.

The distortion-influencing conditions comprise at least a current pose of the structure, i.e. the combination of measured angles between the components. In every pose of the structure, each of the links bears a different load and is thus subject to a different distortion (unless the CMM 1 would be used in zero-gravity environments). Thus, distortion information for a multitude of different poses of the structure need to be provided and accessible by the control unit 80. The control unit 80 then determines a current pose of the structure based on the angular data received from the measuring units 22, accesses the distortion information for the current pose from the data base 85, determines a current overall distortion based on the distortion information and on the current pose, and determines the spatial coordinate of the measurement point based on the based on the angular data and on the determined distortion of the structure.

The distortion information may be generated using an archetype of the machine, assuming that each machine that is built with the same components will have the same distortion. Alternatively, the distortion information may be generated for each CMM individually. For generating the distortion information, the structure is brought sequentially into a multitude of different poses, e.g. hundreds or thousands of poses, wherein for each pose a distortion is determined. This may comprise a target-performance comparison, for instance determining a deviation of the measured coordinates from actual coordinates of a measurement point and setting the difference between these values as the overall distortion. To each of the multitude of poses the overall distortion is assigned.

For instance, each of the multitude of poses, for which an overall distortion is determined, may differ from the next poses by increments of 1° about at least one of the axes of rotation R1-R5. For values in-between the increments, the overall distortion may be computed, e.g. by extrapolation. Values for extrapolated overall distortion then may be provided in the data base. Alternatively, the control unit may be configured to perform the extrapolation.

Additionally, the overall distortion may comprise accelerational distortions that are proportional to the second derivative of the pose. Accelerational distortions are a result of movements of the structure, i.e. for assuming a certain position in order to measure a certain measurement point. It is possible to wait at the assumed position before measuring the points - and thus to avoid accelerational distortions to influence the measurement of the CMM. However, it would be advantageous to increase the measurements by not having to wait. Therefore, the distortion information preferably also comprises information relating to accelerational distortions occurring from a multitude of different movements, including an extent of the distortion and a duration of the distortion, e.g. as an increase and decrease of the distortion, in response to the movement.

Distortion generally also depends on a temperature of the structural elements. Therefore, optionally, the control unit 80 may be configured to consider thermal distortions when calculating an overall distortion. The system 8 or the CMM may comprise one or more temperature sensors 90 that generate temperature data which is received by the control unit 80. Optionally, especially if there are more than one temperature sensors, the control unit 80 knows where each of the sensors 90 is positioned, so that an actual temperature distribution within the structure of the CMM may be derived. The control unit 80 accesses the distortion information for the current temperature or temperature distribution from the data base 85, and determines the current overall distortion based also on this distortion information and on the current temperature. To further improve the thermal behavior of the CMM, preferably all structural parts in the measurement chain of the machine (i.e. structural parts of at least all links 10a-c and all joints 20a-c) have the same or basically the same coefficient of thermal expansion (CTE) along the metrology chain (e.g., all joints have the same axial CTE, whereas the radial CTE is less important). Preferably, the CTE is within +-30% of variation along the structure (+-3PPM at 10PPM of absolute CTE value of steel), particularly within +-10%. To achieve the uniform CTE, the same isotropic material may be used for all structural parts. Alternatively, different materials having the same CTE might be used, for instance a stainless steel and a carbon-based composite that is designed to have the same CTE as the used stainless steel.

Moreover, gravity is not the same everywhere on earth. For instance, gravity generally increases towards the poles and decreases with height ("normal gravity"). Thus, the effect of the poses on the distortion may vary to a degree that negatively effects the accuracy of the compensation. For instance, depending on the pose, the distortion of a CMM located in Alaska may be somewhat different than that of the same CMM located in Singapore. Also, gravity anomalies can be found all over the planet; for instance, the composition of the ground at the location of the CMM may influence the value of gravity so that it significantly deviates from normal gravity. For extremely precise applications also tidal effects might be considered by calculating the current positions of celestial bodies, particularly Moon and Sun, e.g. based on the location of the CMM and the exact time and date.

The local value of gravity may be inquired by a user of the CMM and provided to the control unit as a user input, so that the control unit can use it for calculating the overall distortion. Alternatively, a location of the CMM may be received as user input or detected by a sensor of the system or CMM, e.g. a GNSS sensor 95. The normal gravity for that location may then be calculated. Also, a local value of gravity may be accessed by the control unit, e.g. from its internal data base 85 or via the Internet, e.g. from a data base provided online by the manufacturer of the CMM.

Figure 5 illustrates the use of a digital model of the CMM for deriving the position of the probe head and a calibration of the digital model using a reference system. Encoders and other sensors of the CMM allow observations by the CMM, which includes actually measured angles and optionally also other values. Applying a digital model of the CMM may lead to conclusions of the CMM based on its observations, i.e. what we actually want to know, such as the position of the probe head. The digital model comprises CMM parameters, i.e. quantitative descriptions of the CMM, e.g. including the lengths of the links, and a simulation software that provides qualitative descriptions of the CMM, i.e. including the kinematics. The distortion information of the structure may be provided as part of the digital model, particularly as part of the CMM parameters.

The simulation of the CMM can be performed with varying level of details depending on the required performance. For instance, the following options can be used:
1. Rigid model: An ordinary rigid-body model with a single degree of freedom per joint. Since it is too inaccurate for most metrology applications, it may be used predominantly for motion control.
2. Static elastic model: This model has multiple degrees of freedom per joint to compensate for unwanted displacements. Additionally, it compensates the bending of the machine under the force of gravity. It can be used for slow-movement metrology.
3. Dynamic elastic model: This model additionally compensates the bending of the machine under inertial forces. It can be used for fast-movement metrology.
4. Indeterministic correlative model: This model compensates any effect that correlates with measured signals, however requiring huge amounts of calibration data.

Calibration of the CMM to improve the conclusions of the CMM may involve a reference system including an independent metrological device, such as a laser tracker measuring the position of the probe head. The conclusions of the reference system, i.e. about the probe head's position, are the same as those of the CMM but are considered to be correct. Thus, if there is a deviation between the conclusions of the CMM and the reference system regarding a probe head position, the conclusions of the CMM are considered to be incorrect. A calibration software tunes the CMM parameters until the conclusions match, i.e. until the position of the probe head is determined correctly by the CMM. This tuning may include the distortion information.

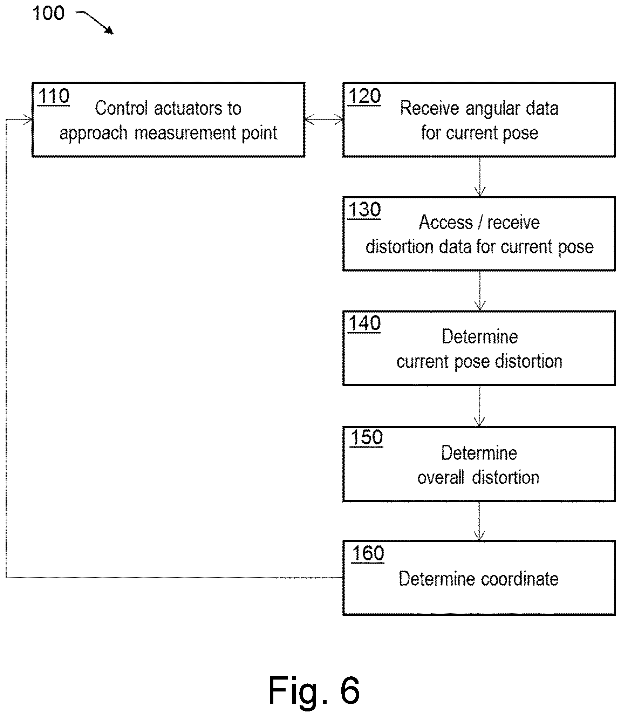

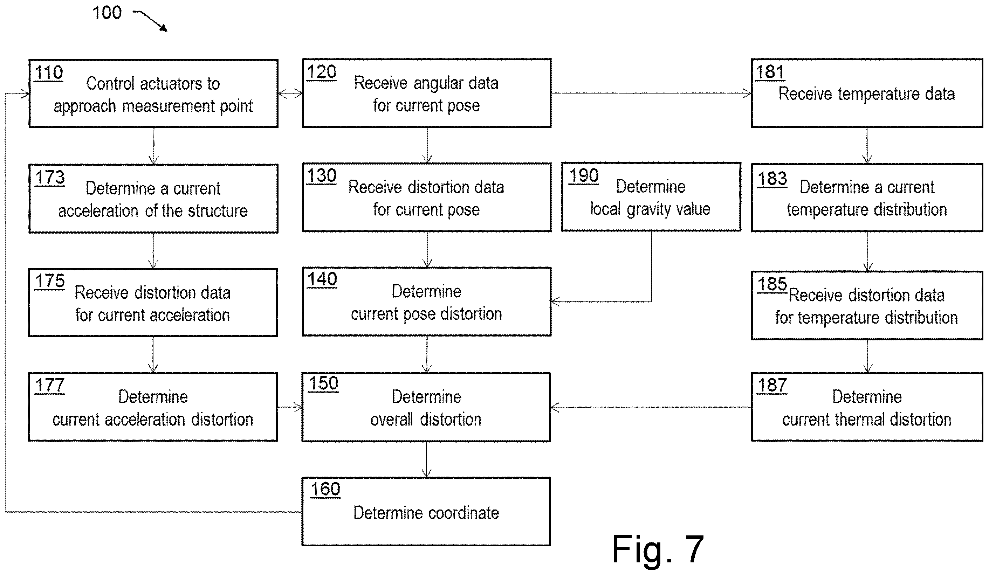

Figure 6 and 7 show two flow charts illustrating two exemplary embodiments of a method 100 according to the invention for controlling the CMM to determine spatial coordinates of measurement points on an object to be measured. The method for instance may be performed by the control unit of the CMM. The method 100 comprises controlling 110 motors of rotary joints of the CMM for driving the probe head relative to the base in order to approach a measurement point with the probe head. The method further comprises receiving 120 angular data from sensors of the rotary joints. The angular data may be received 120 continuously, e.g. during movements of the actuators. The received angular data allows determining a current pose of the structure, the pose being defined by the angles.

In the embodiment shown in Figure 6, the method then continues with receiving 130 pose distortion information, which is provided for a multitude of different poses of the structure, e.g. in a data base of the control unit, and with determining 140 a current pose distortion based on the received angular data (or on a determined pose) and the accessed pose distortion information. Optionally (not shown here), distortion information about distortions occurring in the components under a multitude of different distortion-influencing conditions (or circumstances) may be accessed, the current pose of the structure being only one of these conditions (or circumstances).

Based at least on the current pose distortion - and optionally distortions from other distortion-influencing conditions - a current overall distortion of the structure can be determined 150. Finally, spatial coordinates of the measurement point can be determined 160 based on the angular data and on the current overall distortion of the structure.

The method 100 may then continue with controlling 110 the actuators to approach the next measurement point, repeating the shown steps until spatial coordinates of all measurement points have been determined 160.

In the embodiment shown in Figure 7, the method 100 comprises the same steps as in the embodiment of Figure 6. Additionally, further distortion-influencing conditions are considered for determining the overall distortion.

These further distortion-influencing conditions comprise a current acceleration of the structure, for instance due to the movements of the structure to approach a measurement point. Controlling 110 these movements may be based on continuously received 120 angular data. If the distortion due to acceleration is not considered during these movements, the probe head is at the wrong position until the acceleration is stopped and the acceleration distortion returns to "normal". Thus, in order to prevent providing wrong coordinates, it is necessary to stop the movement for some time at every measurement point, thereby slowing down the measuring process. The method 100 of Figure 7 thus comprises determining 173 a current acceleration of the structure. Preferably, this includes determining current accelerations for each link of the structure separately. The acceleration may be derived based on the change in the angular data. Alternatively, acceleration sensors may be provided on the structure. Then, acceleration distortion data for the determined acceleration(s) is received 175, e.g. by accessing a database. Based on the acceleration distortion data, a current acceleration distortion is determined 177, and the current overall distortion is determined 150 also based on the current acceleration distortion.

The further distortion-influencing conditions also comprise a temperature distribution in the structure. Depending on the used materials, temperature changes may lead to relevant distortions in the structure. The method 100 of Figure 7 thus comprises receiving 181 temperature data from one or more temperature sensors and determining 183, based thereon, a current temperature distribution. If the positions of the sensors on the structural elements are known, based on the known pose a 3D distribution of the sensors can be derived. Based on the known 3D distribution of the sensors and on the temperature values each sensor provides, the temperature distribution can be deduced, e.g. including interpolation between sensor positions. Then, thermal distortion data for the determined temperature distribution is received 185, e.g. by accessing a database. Based on the thermal distortion data, a current thermal distortion is determined 187, and the current overall distortion is determined 150 also based on the current thermal distortion.

The method 100 may further comprise determining 190 a local gravity value, wherein determining the current pose distortion is also based on the local gravity value. Determining 190 the local gravity value may comprise a user input of the respective value. The current pose distortion may then be calculated based on the received distortion data and the gravity value, or distortion data relating to specific combinations of angular data and gravity values may be provided in a data base. Alternatively, only a location of the CMM may be received - e.g. provided through a user input or by means of a GNSS sensor - and the gravity value is determined 190 based on the location. For instance, the normal gravity for that location may be calculated, or a more precise local value of gravity may be accessed from an internal data base or via an Internet connection.

## Claims

1. Coordinate measuring machine (1) for determining at least one spatial coordinate of a measurement point on an object (3), the coordinate measuring machine (1) comprising a structure movably connecting a probe head (30) to a base (40), the structure comprising a plurality of rotary joints (20a-c) and a plurality of elongate components, the components comprising a plurality of links (10a-c), wherein at least one rotary joint
- movably connects two of the components with each other,
- comprises a driving unit (21) comprising a motor to actuate the connected components relative to another, and
- comprises a measuring unit (22) comprising one or more sensors to determine at least one angle between the connected components and to generate angular data,
wherein the coordinate measuring machine (1) comprises a control unit (80) configured
- to control (110) the motor of each driving unit (21) for driving the probe head (30) relative to the base (40) for approaching the measurement point,
- to receive (120) the angular data, and
- to determine the at least one spatial coordinate of the measurement point based on the angular data,
**characterized in that**
the control unit (80) has access to distortion information about distortions occurring in the components and/or joints under a multitude of different distortion-influencing conditions of the structure, wherein the conditions comprise at least a current pose (50a-b) of the structure that is defined by the angles between the components, the distortion information comprising pose distortion information for a multitude of different poses (50a-b) of the structure, the control unit (80) being configured
- to receive (130) pose distortion information for the current pose (50a-b),
- to determine (140) a current pose distortion based on the pose distortion information for the current pose (50a-b), the pose distortion being a distortion of the structure due to the pose (50a-b),
- to determine (150) a current overall distortion of the structure based at least on the current pose distortion, and
- to determine (160) the at least one spatial coordinate also based on the current overall distortion of the structure.

2. Coordinate measuring machine (1) according to claim 1, wherein the conditions comprise at least one or more current accelerations of the structure that are a consequence of a motorized movement of the components, wherein the distortion information comprises acceleration distortion information for a multitude of different movements (70) of the structure, the control unit being configured
- to determine (173) a current acceleration of the structure, particularly based on the angular data,
- to determine (177) a current acceleration distortion based on the acceleration distortion information and on the current acceleration, and
- to determine (150) the current overall distortion of the structure based also on the current acceleration distortion.

3. Coordinate measuring machine (1) according to claim 1 or claim 2, wherein the conditions comprise at least a current temperature distribution in the structure, wherein the distortion information comprises thermal distortion information for a multitude of different temperature distributions in the structure, the control unit being configured
- to receive (181) temperature data,
- to determine (183) a current temperature distribution of the structure based on the temperature data,
- to determine (187) a current thermal distortion based on the thermal distortion information and on the current temperature distribution, and
- to determine (150) the current overall distortion of the structure based also on the current thermal distortion,
particularly wherein one or more temperature sensors are provided at each link or at each component, the temperature data being generated by the temperature sensors.

4. Coordinate measuring machine (1) according to any one of the preceding claims, wherein the amount of pose distortion is at least partly a consequence of gravity, wherein the distortion information comprises the pose distortion information for a multitude of different poses of the structure under the influence of a multitude of different gravitational values, the control unit being configured
- to determine (190) a gravitational value for a current location of the coordinate measuring machine (1), particularly for a current geographic location, and
- to determine (140) the current pose distortion based also on the gravitational value,
particularly wherein the control unit is configured to receive position data related to a location of the coordinate measuring machine (1) and to determine the current location of the coordinate measuring machine (1) based on the position data.

5. Coordinate measuring machine (1) according to any one of the preceding claims, wherein
- the distortion information relates to distortions occurring in each of the links (10a-c), and/or
- the elongate components further comprise the base (40) and/or the probe head (30).

6. Coordinate measuring machine (1) according to any one of the preceding claims, wherein
- at least a subset of the components, particularly at least a subset of the links (10a-c), comprises supporting elements that are made from a first material or material composition,
- at least a subset of the rotary joints (20a-c) comprises supporting elements that are made from a second material or material composition, and
- the first material or material composition is more flexible than the second material or material composition,
particularly wherein
- the first material or material composition has a lower overall density than the second material or material composition;
- the first material composition comprises light metals, particularly aluminium, light metal alloys, ceramics, plastics and/or carbon-fibre-reinforced polymers; and/or
- the second material or material composition comprises steel, particularly high-alloy steel.

7. Coordinate measuring machine (1) according to any one of the preceding claims, wherein the measuring unit (22) and the driving unit (21) of each rotary joint (20a-c) are thermally decoupled from each other and/or are provided in separate housings.

8. Coordinate measuring machine (1) according to any one of the preceding claims, wherein at least one rotary joint (20a-c) comprises a measuring unit (22) that includes at least two rotary encoders as angular sensors, each rotary encoder being configured to determine a relative pose between a first link and a second link with at least three degrees of freedom.

9. Coordinate measuring machine (1) according to any one of the preceding claims, wherein at least one measuring unit (22) is configured to determine relative poses between two links (10a-c) in at least five degrees of freedom.

10. Coordinate measuring machine (1) according to any one of the preceding claims, wherein the distortion information is provided as part of a digital model of the coordinate measuring machine (1).

11. Computer-implemented method (100) for controlling a coordinate measuring machine (1), particularly a coordinate measuring machine according to any one of the preceding claims, to determine at least one spatial coordinate of a measurement point on an object (3) to be measured, wherein the coordinate measuring machine (1) comprises a structure movably connecting a probe head (30) to a base (40), the structure comprising a plurality of rotary joints (20a-c) and a plurality of elongate components, the components comprising a plurality of links (10a-c), each rotary joint (20a-c)
- movably connecting two of the components with each other,
- comprising a driving unit (21) with a motor to actuate the connected components relative to another, and
- a measuring unit (22) with one or more angular sensors to measure at least one angle between the connected components and to generate angular data,
the method (100) comprising controlling (110) the motors for driving the probe head (30) relative to the base for approaching the measurement point, and receiving (120) the angular data,
**characterized by**
- receiving (130, 175, 185) distortion information about distortions occurring in the components under a multitude of different distortion-influencing conditions, wherein the conditions comprise at least a current pose (50a-b) of the structure that is defined by the angles between the links, the distortion information comprising pose distortion information for a multitude of different poses (50a-b) of the structure,
- determining (140) a current pose distortion based on the pose distortion information and on the angular data,
- determining (150) a current overall distortion of the structure based at least on the current pose distortion, and
- determining (160) the at least one spatial coordinate of the measurement point based on the angular data and on the determined current overall distortion.

12. Method (100) according to claim 11, wherein the conditions comprise at least current accelerations of the structure that are a consequence of a motorized movement (70) of the components, wherein the distortion information comprises acceleration distortion information for a multitude of different movements of the structure, the method comprising
- determining (173) a current movement or acceleration of the structure, particularly based on the angular data, and
- determining (177) a current acceleration distortion based on the acceleration distortion information and on the current movement,
wherein determining (150) the current overall distortion of the structure is also based on the current acceleration distortion.

13. Method (100) according to claim 11 or claim 12, wherein the conditions comprise at least a current temperature distribution in the structure, wherein the distortion information comprises thermal distortion information for a multitude of different temperature distributions in the structure, the method comprising
- receiving (181) temperature data,
- determining (183) a current temperature distribution of the structure based on the temperature data, and
- determining (187) a current thermal distortion based on the thermal distortion information and on the current temperature distribution,
wherein determining (150) the current overall distortion of the structure is also based on the current thermal distribution.

14. Method (100) according to any one of claims 11 to 13, wherein the amount of pose distortion is at least partly a consequence of gravity, wherein the distortion information comprises the pose distortion information for a multitude of different poses (50a-b) of the structure under the influence of a multitude of different gravitational values, the method comprising
- receiving position data related to a location of the coordinate measuring machine (1), particularly a geographic location,
- determining a current location of the coordinate measuring machine (1) based on the position data, and
- determining (190) a gravitational value for the current location,
wherein determining (140) the current pose distortion is also based on the gravitational value for the current location.

15. Computer programme product comprising programme code which is stored on a machine-readable medium, or being embodied by an electromagnetic wave comprising a programme code segment, and having computer-executable instructions for performing, particularly when executed in a control unit of a coordinate measuring machine according to any one of claims 1 to 10, the method according to any one of claims 11 to 14.

## Patentansprüche

1. Koordinatenmessmaschine (1) zum Bestimmen von wenigstens einer Raumkoordinate eines Messpunkts auf einem Objekt (3), wobei die Koordinatenmessmaschine (1) eine Struktur umfasst, die einen Sondenkopf (30) beweglich mit einer Basis (40) verbindet, wobei die Struktur eine Mehrzahl von Drehgelenken (20a-c) und eine Mehrzahl von länglichen Komponenten umfasst, wobei die Komponenten eine Mehrzahl von Verbindungen (10a-c) umfassen, wobei wenigstens ein Drehgelenk
- zwei der Komponenten beweglich miteinander verbindet,
- eine Antriebseinheit (21) umfasst, die einen Motor umfasst, um die verbundenen Komponenten relativ zueinander zu betätigen, und
- eine Messeinheit (22) umfasst, die einen oder mehrere Sensoren umfasst, um wenigstens einen Winkel zwischen den verbundenen Komponenten zu bestimmen und Winkeldaten zu erzeugen,
wobei die Koordinatenmessmaschine (1) eine Steuereinheit (80) umfasst, die dafür ausgelegt ist,
- den Motor jeder Antriebseinheit (21) zu steuern (110), um den Sondenkopf (30) relativ zu der Basis (40) anzutreiben, um sich an den Messpunkt anzunähern,
- die Winkeldaten zu empfangen (120), und
- die wenigstens eine Raumkoordinate des Messpunkts auf der Grundlage der Winkeldaten zu bestimmen,
**dadurch gekennzeichnet, dass**
die Steuereinheit (80) Zugriff auf Verzerrungsinformationen über Verzerrungen hat, die in den Komponenten und/oder Gelenken unter einer Vielzahl verschiedener verzerrungsbeeinflussender Bedingungen der Struktur auftreten, wobei die Bedingungen wenigstens eine aktuelle Stellung (50a-b) der Struktur umfassen, die durch die Winkel zwischen den Komponenten bestimmt wird, wobei die Verzerrungsinformationen Stellungsverzerrungsinformationen für eine Vielzahl verschiedener Stellungen (50a-b) der Struktur umfassen,
wobei die Steuereinheit (80) dafür ausgelegt ist,
- Stellungsverzerrungsinformationen für die aktuelle Stellung (50a-b) zu empfangen (130),
- eine aktuelle Stellungsverzerrung auf der Grundlage der Stellungsverzerrungsinformationen für die aktuelle Stellung (50a-b) zu bestimmen (140), wobei die Stellungsverzerrung eine Verzerrung der Struktur aufgrund der Stellung (50a-b) ist,
- eine aktuelle Gesamtverzerrung der Struktur wenigstens auf der Grundlage der aktuellen Stellungsverzerrung zu bestimmen (150), und
- die wenigstens eine Raumkoordinate auch auf der Grundlage der aktuellen Gesamtverzerrung der Struktur zu bestimmen (160).

2. Koordinatenmessmaschine (1) nach Anspruch 1, wobei die Bedingungen wenigstens eine oder mehrere aktuelle Beschleunigungen der Struktur umfassen, die eine Folge einer motorisierten Bewegung der Komponenten sind, wobei die Verzerrungsinformationen Beschleunigungsverzerrungsinformationen für eine Vielzahl verschiedener Bewegungen (70) der Struktur umfassen, wobei die Steuereinheit dafür ausgelegt ist,
- eine aktuelle Beschleunigung der Struktur insbesondere auf der Grundlage der Winkeldaten zu bestimmen (173),
- eine aktuelle Beschleunigungsverzerrung auf der Grundlage der Beschleunigungsverzerrungsinformationen und der aktuellen Beschleunigung zu bestimmen (177), und
- die aktuelle Gesamtverzerrung der Struktur auch auf der Grundlage der aktuellen Beschleunigungsverzerrung zu bestimmen (150).

3. Koordinatenmessmaschine (1) nach Anspruch 1 oder 2, wobei die Bedingungen wenigstens eine aktuelle Temperaturverteilung in der Struktur umfassen, wobei die Verzerrungsinformationen thermische Verzerrungsinformationen für eine Vielzahl verschiedener Temperaturverteilungen in der Struktur umfassen, wobei die Steuereinheit dafür ausgelegt ist,
- Temperaturdaten zu empfangen (181),
- eine aktuelle Temperaturverteilung der Struktur auf der Grundlage der Temperaturdaten zu bestimmen (183),
- eine aktuelle thermische Verzerrung auf der Grundlage der thermischen Verzerrungsinformationen und der aktuellen Temperaturverteilung zu bestimmen (187), und
- die aktuelle Gesamtverzerrung der Struktur auch auf der Grundlage der aktuellen thermischen Verzerrung zu bestimmen (150),
wobei insbesondere ein oder mehrere Temperatursensoren an jeder Verbindung oder jeder Komponente vorgesehen sind, wobei die Temperaturdaten durch die Temperatursensoren erzeugt werden.

4. Koordinatenmessmaschine (1) nach einem der vorhergehenden Ansprüche, wobei das Ausmaß der Stellungsverzerrung wenigstens teilweise eine Folge der Schwerkraft ist, wobei die Verzerrungsinformationen die Stellungsverzerrungsinformationen für eine Vielzahl verschiedener Stellungen der Struktur unter dem Einfluss einer Vielzahl verschiedener Schwerkraftwerte umfassen, wobei die Steuereinheit dafür ausgelegt ist,
- einen Schwerkraftwert für einen aktuellen Standort der Koordinatenmessmaschine (1), insbesondere für einen aktuellen geografischen Standort, zu bestimmen (190), und
- die aktuelle Stellungsverzerrung auch auf der Grundlage des Schwerkraftwerts zu bestimmen (140),
wobei insbesondere die Steuereinheit dafür ausgelegt ist, Positionsdaten in Bezug auf einen Standort der Koordinatenmessmaschine (1) zu empfangen und auf der Grundlage der Positionsdaten den aktuellen Standort der Koordinatenmessmaschine (1) zu bestimmen.

5. Koordinatenmessmaschine (1) nach einem der vorhergehenden Ansprüche, wobei
- sich die Verzerrungsinformationen auf Verzerrungen beziehen, die in jeder der Verbindungen (10a-c) auftreten, und/oder
- die länglichen Komponenten ferner die Basis (40) und/oder den Sondenkopf (30) umfassen.

6. Koordinatenmessmaschine (1) nach einem der vorhergehenden Ansprüche, wobei
- wenigstens eine Teilmenge der Komponenten, insbesondere wenigstens eine Teilmenge der Verbindungen (10a-c), Stützelemente umfasst, die aus einem ersten Material oder einer ersten Materialzusammensetzung hergestellt sind,
- wenigstens eine Teilmenge der Drehgelenke (20a-c) Stützelemente umfasst, die aus einem zweiten Material oder einer zweiten Materialzusammensetzung hergestellt sind, und
- das erste Material oder die erste Materialzusammensetzung biegsamer ist als das zweite Material oder die zweite Materialzusammensetzung,
wobei insbesondere
- das erste Material oder die erste Materialzusammensetzung eine geringere Gesamtdichte als das zweite Material oder die zweite Materialzusammensetzung aufweist;
- die erste Materialzusammensetzung Leichtmetalle, insbesondere Aluminium, Leichtmetalllegierungen, Keramiken, Kunststoffe und/oder kohlenstofffaserverstärkte Polymere umfasst; und/oder
- das zweite Material oder die zweite Materialzusammensetzung Stahl, insbesondere hochlegierten Stahl, umfasst.

7. Koordinatenmessmaschine (1) nach einem der vorhergehenden Ansprüche, wobei die Messeinheit (22) und die Antriebseinheit (21) jedes Drehgelenks (20a-c) thermisch voneinander entkoppelt sind und/oder in getrennten Gehäusen vorgesehen sind.

8. Koordinatenmessmaschine (1) nach einem der vorhergehenden Ansprüche, wobei wenigstens ein Drehgelenk (20a-c) eine Messeinheit (22) umfasst, die wenigstens zwei Drehwinkelgeber als Winkelsensoren umfasst, wobei jeder Drehwinkelgeber dafür ausgelegt ist, eine relative Stellung zwischen einer ersten Verbindung und einer zweiten Verbindung mit wenigstens drei Freiheitsgraden zu bestimmen.

9. Koordinatenmessmaschine (1) nach einem der vorhergehenden Ansprüche, wobei wenigstens eine Messeinheit (22) dafür ausgelegt ist, relative Stellungen zwischen zwei Verbindungen (10a-c) in wenigstens fünf Freiheitsgraden zu bestimmen.

10. Koordinatenmessmaschine (1) nach einem der vorhergehenden Ansprüche, wobei die Verzerrungsinformationen als Teil eines digitalen Modells der Koordinatenmessmaschine (1) bereitgestellt werden.

11. Computerimplementiertes Verfahren (100) zum Steuern einer Koordinatenmessmaschine (1), insbesondere einer Koordinatenmessmaschine nach einem der vorhergehenden Ansprüche, um wenigstens eine Raumkoordinate eines Messpunkts auf einem zu vermessenden Objekt (3) zu bestimmen, wobei die Koordinatenmessmaschine (1) eine Struktur umfasst, die einen Sondenkopf (30) beweglich mit einer Basis (40) verbindet, wobei die Struktur eine Mehrzahl von Drehgelenken (20a-c) und eine Mehrzahl von länglichen Komponenten umfasst, wobei die Komponenten eine Mehrzahl von Verbindungen (10a-c) umfassen, wobei jedes Drehgelenk (20a-c)
- zwei der Komponenten beweglich miteinander verbindet,
- eine Antriebseinheit (21) mit einem Motor umfasst, um die verbundenen Komponenten relativ zueinander zu betätigen, und
- eine Messeinheit (22) mit einem oder mehreren Winkelsensoren umfasst, um wenigstens einen Winkel zwischen den verbundenen Komponenten zu messen und Winkeldaten zu erzeugen,
wobei das Verfahren (100) das Steuern (110) der Motoren zum Antreiben des Sondenkopfs (30) relativ zu der Basis zur Annäherung an den Messpunkt und das Empfangen (120) der Winkeldaten umfasst,
**gekennzeichnet durch**
- das Empfangen (130, 175, 185) von Verzerrungsinformationen über Verzerrungen, die in den Komponenten unter einer Vielzahl verschiedener verzerrungsbeeinflussender Bedingungen auftreten, wobei die Bedingungen wenigstens eine aktuelle Stellung (50ab) der Struktur umfassen, die durch die Winkel zwischen den Verbindungen definiert wird, wobei die Verzerrungsinformationen Stellungsverzerrungsinformationen für eine Vielzahl verschiedener Stellungen (50ab) der Struktur umfassen,
- das Bestimmen (140) einer aktuellen Stellungsverzerrung auf der Grundlage der Stellungsverzerrungsinformationen und der Winkeldaten,
- das Bestimmen (150) einer aktuellen Gesamtverzerrung der Struktur wenigstens auf der Grundlage der aktuellen Stellungsverzerrung, und
- das Bestimmen (160) der wenigstens einen Raumkoordinate des Messpunkts auf der Grundlage der Winkeldaten und der bestimmten aktuellen Gesamtverzerrung.

12. Verfahren (100) nach Anspruch 11, wobei die Bedingungen wenigstens aktuelle Beschleunigungen der Struktur umfassen, die eine Folge einer motorisierten Bewegung (70) der Komponenten sind, wobei die Verzerrungsinformationen Beschleunigungsverzerrungsinformationen für eine Vielzahl verschiedener Bewegungen der Struktur umfassen, wobei das Verfahren Folgendes umfasst:
- Bestimmen (173) einer aktuellen Bewegung oder Beschleunigung der Struktur, insbesondere auf der Grundlage der Winkeldaten, und
- Bestimmen (177) einer aktuellen Beschleunigungsverzerrung auf der Grundlage der Beschleunigungsverzerrungsinformationen und der aktuellen Bewegung,
wobei das Bestimmen (150) der aktuellen Gesamtverzerrung der Struktur auch auf der Grundlage der aktuellen Beschleunigungsverzerrung erfolgt.

13. Verfahren (100) nach Anspruch 11 oder 12, wobei die Bedingungen wenigstens eine aktuelle Temperaturverteilung in der Struktur umfassen, wobei die Verzerrungsinformationen thermische Verzerrungsinformationen für eine Vielzahl verschiedener Temperaturverteilungen in der Struktur umfassen, wobei das Verfahren Folgendes umfasst:
- Empfangen (181) von Temperaturdaten,
- Bestimmen (183) einer aktuellen Temperaturverteilung der Struktur auf der Grundlage der Temperaturdaten, und
- Bestimmen (187) einer aktuellen thermischen Verzerrung auf der Grundlage der thermischen Verzerrungsinformationen und der aktuellen Temperaturverteilung,
wobei das Bestimmen (150) der aktuellen Gesamtverzerrung der Struktur auch auf der Grundlage der aktuellen thermischen Verteilung erfolgt.

14. Verfahren (100) nach einem der Ansprüche 11 bis 13, wobei das Ausmaß der Stellungsverzerrung wenigstens teilweise eine Folge der Schwerkraft ist, wobei die Verzerrungsinformationen die Stellungsverzerrungsinformationen für eine Vielzahl verschiedener Stellungen (50a-b) der Struktur unter dem Einfluss einer Vielzahl verschiedener Schwerkraftwerte umfassen, wobei das Verfahren Folgendes umfasst:
- Empfangen von Positionsdaten in Bezug auf einen Standort der Koordinatenmessmaschine (1), insbesondere einen geografischen Standort,
- Bestimmen eines aktuellen Standorts der Koordinatenmessmaschine (1) auf der Grundlage der Positionsdaten, und
- Bestimmen (190) eines Schwerkraftwerts für den aktuellen Standort,
wobei das Bestimmen (140) der aktuellen Stellungsverzerrung auch auf der Grundlage des Schwerkraftwerts für den aktuellen Standort erfolgt.

15. Computerprogrammprodukt, das einen Programmcode umfasst, der auf einem maschinenlesbaren Medium gespeichert ist, oder das durch eine elektromagnetische Welle verkörpert wird, die ein Programmcode-Segment umfasst, und das computerausführbare Anweisungen aufweist, um insbesondere bei Ausführung in einer Steuereinheit einer Koordinatenmessmaschine nach einem der Ansprüche 1 bis 10 das Verfahrens nach einem der Ansprüche 11 bis 14 durchzuführen.

## Revendications

1. Machine de mesure de coordonnées (1) pour déterminer au moins une coordonnée spatiale d'un point de mesure sur un objet (3), la machine de mesure de coordonnées (1) comprenant une structure reliant de manière mobile une tête de sonde (30) à une base (40), la structure comprenant une pluralité de joints rotatifs (20a-c) et une pluralité de composants allongés, les composants comprenant une pluralité de liaisons (10a-c), dans laquelle au moins un joint rotatif
- relie de manière mobile deux des composants l'un à l'autre,
- comprend une unité d'entraînement (21) comprenant un moteur pour actionner les composants reliés l'un par rapport à l'autre, et
- comprend une unité de mesure (22) comprenant un ou plusieurs capteurs pour déterminer au moins un angle entre les composants reliés et pour générer des données angulaires,
la machine de mesure de coordonnées (1) comprenant une unité de commande (80) configurée
- pour commander (110) le moteur de chaque unité d'entraînement (21) afin d'entraîner la tête de sonde (30) par rapport à la base (40) pour approcher le point de mesure,
- pour recevoir (120) les données angulaires, et
- pour déterminer l'au moins une coordonnée spatiale du point de mesure sur la base des données angulaires,
**caractérisée en ce que**
l'unité de commande (80) a accès à des informations de distorsion concernant des distorsions se produisant dans les composants et/ou les joints dans une multitude de conditions influençant la distorsion différentes de la structure,
dans laquelle les conditions comprennent au moins une pose actuelle (50a-b) de la structure qui est définie par les angles entre les composants, les informations de distorsion comprenant des informations de distorsion de pose pour une multitude de poses différentes (50a-b) de la structure, l'unité de commande (80) étant configurée
- pour recevoir (130) des informations de distorsion de pose pour la pose actuelle (50a-b),
- pour déterminer (140) une distorsion de pose actuelle sur la base des informations de distorsion de pose pour la pose actuelle (50a-b), la distorsion de pose étant une distorsion de la structure due à la pose (50a-b),
- pour déterminer (150) une distorsion globale actuelle de la structure sur la base au moins de la distorsion de pose actuelle, et
- pour déterminer (160) l'au moins une coordonnée spatiale également sur la base de la distorsion globale actuelle de la structure.

2. Machine de mesure de coordonnées (1) selon la revendication 1,
dans laquelle les conditions comprennent au moins une ou plusieurs accélérations actuelles de la structure qui sont une conséquence d'un mouvement motorisé des composants,
dans laquelle les informations de distorsion comprennent des informations de distorsion d'accélération pour une multitude de mouvements (70) différents de la structure, l'unité de commande étant configurée
- pour déterminer (173) une accélération actuelle de la structure, en particulier sur la base des données angulaires,
- pour déterminer (177) une distorsion d'accélération actuelle sur la base des informations de distorsion d'accélération et de l'accélération actuelle, et
- pour déterminer (150) la distorsion globale actuelle de la structure sur la base également de la distorsion d'accélération actuelle.

3. Machine de mesure de coordonnées (1) selon la revendication 1 ou la revendication 2, dans laquelle les conditions comprennent au moins une distribution de température actuelle dans la structure,
dans laquelle les informations de distorsion comprennent des informations de distorsion thermique pour une multitude de distributions de température différentes dans la structure, l'unité de commande étant configurée
- pour recevoir (181) des données de température,
- pour déterminer (183) une distribution de température actuelle de la structure sur la base des données de température,
- pour déterminer (187) une distorsion thermique actuelle sur la base des informations de distorsion thermique et de la distribution de température actuelle, et
- pour déterminer (150) la distorsion globale actuelle de la structure sur la base également de la distorsion thermique actuelle,
en particulier dans laquelle un ou plusieurs capteurs de température sont prévus au niveau de chaque liaison ou au niveau de chaque composant, les données de température étant générées par les capteurs de température.

4. Machine de mesure de coordonnées (1) selon l'une quelconque des revendications précédentes, dans laquelle la quantité de distorsion de pose est au moins partiellement une conséquence de la gravité,
dans laquelle les informations de distorsion comprennent les informations de distorsion de pose pour une multitude de poses différentes de la structure sous l'influence d'une multitude de valeurs gravitationnelles différentes, l'unité de commande étant configurée
- pour déterminer (190) une valeur gravitationnelle pour un emplacement actuel de la machine de mesure de coordonnées (1), en particulier pour un emplacement géographique actuel, et
- pour déterminer (140) la distorsion de pose actuelle sur la base également de la valeur gravitationnelle,
en particulier, dans laquelle l'unité de commande est configurée pour recevoir des données de position relatives à un emplacement de la machine de mesure de coordonnées (1) et pour déterminer l'emplacement actuel de la machine de mesure de coordonnées (1) sur la base des données de position.

5. Machine de mesure de coordonnées (1) selon l'une quelconque des revendications précédentes, dans laquelle
- les informations de distorsion concernent les distorsions se produisant dans chacune des liaisons (10a-c), et/ou
- les composants allongés comprennent en outre la base (40) et/ou la tête de sonde (30).

6. Machine de mesure de coordonnées (1) selon l'une quelconque des revendications précédentes, dans laquelle
- au moins un sous-ensemble des composants, en particulier au moins un sous-ensemble des liaisons (10a-c), comprend des éléments de support qui sont fabriqués à partir d'un premier matériau ou d'une première composition de matériau,
- au moins un sous-ensemble des joints rotatifs (20a-c) comprend des éléments de support qui sont fabriqués à partir d'un second matériau ou d'une seconde composition de matériau, et
- le premier matériau ou la première composition de matériau est plus souple que le second matériau ou la seconde composition de matériau,
en particulier dans laquelle
- le premier matériau ou la première composition de matériau a une densité globale inférieure à celle du second matériau ou de la seconde composition de matériau ;
- la première composition de matériau comprend des métaux légers, en particulier de l'aluminium, des alliages de métaux légers, des céramiques, des plastiques et/ou des polymères renforcés de fibres de carbone ; et/ou
- le second matériau ou la seconde composition de matériau comprend de l'acier, en particulier de l'acier fortement allié.

7. Machine de mesure de coordonnées (1) selon l'une quelconque des revendications précédentes, dans laquelle l'unité de mesure (22) et l'unité d'entraînement (21) de chaque joint rotatif (20a-c) sont thermiquement découplées l'une de l'autre et/ou sont prévues dans des logements séparés.

8. Machine de mesure de coordonnées (1) selon l'une quelconque des revendications précédentes, dans laquelle au moins un joint rotatif (20a-c) comprend une unité de mesure (22) qui inclut au moins deux encodeurs rotatifs comme capteurs angulaires, chaque encodeur rotatif étant configuré pour déterminer une pose relative entre une première liaison et une seconde liaison avec au moins trois degrés de liberté.

9. Machine de mesure de coordonnées (1) selon l'une quelconque des revendications précédentes, dans laquelle au moins une unité de mesure (22) est configurée pour déterminer des poses relatives entre deux liaisons (10a-c) selon au moins cinq degrés de liberté.

10. Machine de mesure de coordonnées (1) selon l'une quelconque des revendications précédentes, dans laquelle les informations de distorsion sont fournies dans le cadre d'un modèle numérique de la machine de mesure de coordonnées (1).

11. Procédé (100) implémenté par ordinateur pour commander une machine de mesure de coordonnées (1), en particulier une machine de mesure de coordonnées selon l'une quelconque des revendications précédentes, pour déterminer au moins une coordonnée spatiale d'un point de mesure sur un objet (3) à mesurer, dans lequel la machine de mesure de coordonnées (1) comprend une structure reliant de manière mobile une tête de sonde (30) à une base (40), la structure comprenant une pluralité de joints rotatifs (20a-c) et une pluralité de composants allongés, les composants comprenant une pluralité de liaisons (10a-c), chaque joint rotatif (20a-c)
- reliant de manière mobile deux des composants l'un à l'autre,
- comprenant une unité d'entraînement (21) avec un moteur pour actionner les composants reliés l'un par rapport à l'autre, et
- une unité de mesure (22) avec un ou plusieurs capteurs angulaires pour mesurer au moins un angle entre les composants reliés et pour générer des données angulaires,
le procédé (100) comprenant la commande (110) des moteurs pour entraîner la tête de sonde (30) par rapport à la base afin d'approcher le point de mesure, et la réception (120) des données angulaires,
**caractérisé en ce que**
- la réception (130, 175, 185) d'informations de distorsion concernant les distorsions se produisant dans les composants dans une multitude de conditions influençant la distorsion différentes, dans lequel les conditions comprennent au moins une pose actuelle (50a-b) de la structure qui est définie par les angles entre les liaisons, les informations de distorsion comprenant des informations de distorsion de pose pour une multitude de poses différentes (50a-b) de la structure,
- la détermination (140) d'une distorsion de pose actuelle sur la base des informations de distorsion de pose et des données angulaires,
- la détermination (150) d'une distorsion globale actuelle de la structure sur la base au moins de la distorsion de pose actuelle, et
- la détermination (160) de l'au moins une coordonnée spatiale du point de mesure sur la base des données angulaires et de la distorsion globale actuelle déterminée.

12. Procédé (100) selon la revendication 11, dans lequel les conditions comprennent au moins des accélérations actuelles de la structure qui sont une conséquence d'un mouvement motorisé (70) des composants, dans lequel les informations de distorsion comprennent des informations de distorsion d'accélération pour une multitude de mouvements différents de la structure, le procédé comprenant
- la détermination (173) d'un mouvement actuel ou d'une accélération actuelle de la structure, en particulier sur la base des données angulaires, et
- la détermination (177) d'une distorsion d'accélération actuelle sur la base des informations de distorsion d'accélération et du mouvement actuel,
dans lequel la détermination (150) de la distorsion globale actuelle de la structure est également basée sur la distorsion d'accélération actuelle.

13. Procédé (100) selon la revendication 11 ou la revendication 12, dans lequel les conditions comprennent au moins une distribution de température actuelle dans la structure, dans lequel les informations de distorsion comprennent des informations de distorsion thermique pour une multitude de distributions de température différentes dans la structure, le procédé comprenant
- la réception (181) des données de température,
- la détermination (183) d'une distribution de température actuelle de la structure sur la base des données de température, et
- la détermination (187) d'une distorsion thermique actuelle sur la base des informations de distorsion thermique et de la distribution de température actuelle,
dans lequel la détermination (150) de la distorsion globale actuelle de la structure est également basée sur la distribution thermique actuelle.

14. Procédé (100) selon l'une quelconque des revendications 11 à 13, dans lequel la quantité de distorsion de pose est au moins partiellement une conséquence de la gravité, dans lequel les informations de distorsion comprennent les informations de distorsion de pose pour une multitude de poses différentes (50a-b) de la structure sous l'influence d'une multitude de valeurs gravitationnelles différentes, le procédé comprenant
- la réception de données de position relatives à un emplacement de la machine de mesure de coordonnées (1), en particulier un emplacement géographique,
- la détermination d'un emplacement actuel de la machine de mesure de coordonnées (1) sur la base des données de position, et
- la détermination (190) d'une valeur gravitationnelle pour l'emplacement actuel,
dans lequel la détermination (140) de la distorsion de pose actuelle est également basée sur la valeur gravitationnelle pour l'emplacement actuel.

15. Produit de programme d'ordinateur comprenant un code de programme qui est stocké sur un support lisible par machine, ou étant incarné par une onde électromagnétique comprenant un segment de code de programme, et ayant des instructions exécutables par ordinateur pour effectuer, en particulier lorsqu'il est exécuté dans une unité de commande d'une machine de mesure de coordonnées selon l'une quelconque des revendications 1 à 10, le procédé selon l'une quelconque des revendications 11 à 14.
